# EUROPÄISCHE PATENTANMELDUNG

(11) **EP 4 706 994 A1**
(43) Veröffentlichungstag der Anmeldung: **11.03.2026**
(21) Anmeldenummer: 25193699.3
(22) Anmeldetag: 04.08.2025
(51) Int. Cl.: B60C 11/04, B60C 11/12

(54) **LAUFSTREIFEN UND FAHRZEUGREIFEN MIT EINSCHNITT UND OBERFLÄCHENELEMENT**

(30) Priorität: 04.09.2024 DE 102024208398
(71) Anmelder: Continental Reifen Deutschland GmbH, 30175 Hannover (DE)
(72) Erfinder: Micuch, Michal, 020 01 Púchov (SK); Kotlas, Jan, 020 01 Púchov (SK); Rittweger, Stefan, 30175 Hannover (DE)
(74) Vertreter: Continental Corporation

(57) **Zusammenfassung**

Laufstreifen (2) für einen Fahrzeugreifen (1), wobei wenigstens ein Einschnitt (3) in dem Laufstreifen (2) ausgebildet ist, wobei der Einschnitt (3) zwischen einer Basisfläche (4) und einer oberhalb eines Einschnittgrundes (5) gelegenen Zwischentiefe (6) eine Verbreiterung (7) aufweist,

Ein langgestrecktes Oberflächenelement (8) mit einer der Zwischentiefe (6) entsprechenden Tiefe mündet in die Verbreiterung (7) ein.

## Beschreibung

Die Erfindung betrifft einen Laufstreifen für einen Fahrzeugreifen, wobei wenigstens ein Einschnitt in dem Laufstreifen ausgebildet ist, wobei der Einschnitt zwischen einer Basisfläche und einer oberhalb eines Einschnittgrundes gelegenen Zwischentiefe eine Verbreiterung aufweist.

Es ist üblich, Laufstreifen für Fahrzeugreifen mit einem Profil zu versehen, wobei das Profil Passagen zum Aufnehmen und Ausleiten von Matsch, Schnee und Wasser umfassen kann. Die Passagen können in Form von Profilrillen, Einschnitten und/oder sonstigem Negativvolumen vorliegen und können den Laufstreifen in Rippen und/oder Profilblöcke unterteilen. Einschnitte zeichnen sich gegenüber Rillen durch eine geringere Breite, in der Regel von weniger als 2 mm aus. Ein Vorteil der geringen Breite besteht darin, dass sich gegenüberliegende Wände des Einschnitts unter Belastung aneinander abstützen können, was dem Laufstreifen zusätzliche Stabilität verleiht. Ein Nachteil besteht darin, dass die Ränder des Einschnitts an der Basisfläche im Reifenlatsch oft so weit zusammengerückt werden, dass der für den Nassgriff vorteilhafte Kanteneffekt weitgehend neutralisiert wird. Weiterhin sinkt die Entwässerungskapazität des Laufstreifens, wenn das Einschnittvolumen im Bereich des Reifenlatsches durch Verformung des Laufstreifens verringert wird.

US 2020/0122515 A1 beschreibt einen Reifen mit Einschnitten und um die Einschnitte herum ausgebildeten, unter einer Basisfläche zurücktretenden Bereichen, wobei Einschnitt und zurücktretende Bereiche in einer Rille münden. Hierdurch soll eine Schneetraktion verbessert werden.

Der Erfindung liegt die Aufgabe zugrunde, die Nasseigenschaften eines Laufstreifens zu verbessern, ohne dessen Steifigkeit zu sehr herabzusetzen.

Die Aufgabe wird erfindungsgemäß dadurch gelöst, dass ein langgestrecktes Oberflächenelement mit einer der Zwischentiefe entsprechenden Tiefe in die Verbreiterung einmündet.

Die Erfindung erkennt, dass der vorteilhafte Kanteneffekt an der Mündung eines Einschnitts in der Basisfläche auch unter Verformung erhalten bleiben kann, wenn der Einschnitt nahe der Basisfläche verbreitert wird. Darüber hinaus erkennt die Erfindung, dass im Bereich der Verbreiterung trotz zusammengedrückten Einschnittsvolumens Entwässerungskanäle erhalten bleiben können. Um diese Entwässerungskanäle gewinnbringend zu vernetzen, wird erfindungsgemäß ein Oberflächenelement mit dem verbreiterten Bereich des Einschnitts verbunden, wobei das Oberflächenelement der Steifigkeit des Laufstreifens nicht maßgeblich abträglich ist, jedoch durch die Verbreiterungen des Einschnitts aufgenommenes Wasser abzuleiten in der Lage ist.

Sofern im vorliegenden Text die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner als eine maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein und mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden.

Ein langgestrecktes Oberflächenelement weist eine radiale Tiefe, eine Breite und einen lokal senkrecht zu der Breite stehenden Längsverlauf auf. Der Längsverlauf eines langestreckten Oberflächenelements ist wesentlich länger als die Breite des Oberflächenelements und als die Tiefe des Oberflächenelements, beispielsweise wenigstens zehnmal länger als die Breite und/oder die Tiefe.

Die Verbreiterung kann als Teil des Einschnitts betrachtet werden. Das Oberflächenelement mündet in die Verbreiterung des Einschnitts, wenn wenigstens ein Teil des Oberflächenelements direkt in die Verbreiterung übergeht. Vorzugsweise gibt es keinen Übergang zwischen dem Oberflächenelement und einem unverbreiterten Bereich des Einschnitts. Dies kann beispielsweise dadurch erreicht werden, dass das Oberflächenelement seitlich in eine Flanke des Einschnitts mündet, an der die Verbreiterung ausgebildet ist.

Gemäß einer Ausführungsform der Erfindung ist die Verbreiterung nur auf einer Seite des Einschnitts ausgebildet. Dies kann beispielsweise in laufrichtungsgebundenen Profilen gewinnbringend angewendet werden.

Die Verbreiterung kann auch zu beiden Seiten des Einschnitts ausgebildet sein. Beispielsweise kann die Verbreiterung symmetrisch ausgebildet sein, was zu einer gleichmäßigen Steifigkeit beitragen kann.

Die Verbreiterung kann sich von einem inneren Rand des Einschnitts um eine Distanz zwischen 1 mal der Einschnittsbreite und 2,5 mal der Einschnittsbreite nach außen erstrecken. Hierdurch wird ein guter Kompromiss zwischen Nasseigenschaften und Steifigkeit realisiert. Die genannten Maße werden parallel zu der Einschnittsbreite genommen. Als innerer Rand des Einschnitts kann eine Kontur herangezogen werden, die der Einschnitt unterhalb der Zwischentiefe aufweist.

Die Zwischentiefe kann in einem Bereich zwischen 1 mal der Einschnittsbreite und 3 mal der Einschnittsbreite liegen. Hierdurch wird ein guter Kompromiss zwischen Nasseigenschaften und Steifigkeit realisiert. Die Verbreiterung kann zu beiden Seiten des Einschnitts gleich tief sein oder sich unterscheiden.

Die Verbreiterung kann in einem parallel zur Radialrichtung und senkrecht zum Längsverlauf des Einschnitts genommenen Querschnitt eine rechteckige Form annehmen. Hierbei kann die Verbreiterung auf der Zwischentiefe in einem Winkel von 90° aus der Einschnittwand zurücktreten, also einen parallel zu der Basisfläche verlaufenden Boden aufweisen, und in Radialrichtung verlaufende Wände aufweisen. Kanten können mit einem geeigneten Verrundungsradius verrundet werden. Alternativ kann sich die Verbreiterung auch beispielsweise Trichterförmig von der Basisfläche bis zur Zwischentiefe verschmälern.

Ein Verhältnis zwischen einer Breite des Oberflächenelements entlang eines Großteils dessen Längserstreckung auf der einen Seite und der Zwischentiefe auf der anderen Seite kann in einem Bereich zwischen 1 und 0,6 liegen. Ein Großteil der Längserstreckung kann bei 60% oder mehr gegeben sein. Hierdurch wird eine ausreichende Entwässerungskapazität zur Verfügung gestellt, ohne des Laufstreifen zu sehr zu destabilisieren.

Das Oberflächenelement kann sich mit zunehmender Nähe zu der Verbreiterung des Einschnitts zunehmend aufweiten, sodass sich ein auf der Zwischentiefe ausgeführter flächiger Mündungsbereich ausbildet. Mit anderen Worten kann die Verbreiterung des Einschnitts im Bereich des Oberflächenelements und in Richtung des Oberflächenelements lokal zunehmen. In dem Mündungsbereich können die Verbreiterung und das Oberflächenelement fließend ineinander übergehen. Hierdurch wird ein besonders gutes Strömungsverhalten durch das Netz aus Verbreiterung und Oberflächenelement sichergestellt.

Das Oberflächenelement kann über verrundete Wandbereiche in die Einschittswände im Bereich der Verbreiterung übergehen. Insbesondere können die verrundeten Wandbereiche durch Verrundungsradii in einem Bereich zwischen 2 mm und 5 mm beschreibbar sein. Durch den Verzicht auf scharfe Ecken wird die Rissanfälligkeit verringert. Weiterhin können die verrundeten Übergänge einem Strömungsverhalten zuträglich sein.

Der Einschnitt verläuft vorzugsweise in einem Winkel von weniger als 60°, weiter vorzugsweise von weniger als 40° zur Axialrichtung. Solche Einschnitte sind besonders anfällig dafür, sich unter Beschleunigungs- and Bremskräften in der Bodenaufstandsfläche des Reifens zu schließen, sodass die Erfindung mit besonderem Vorteil angewendet werden kann.

Der Einschnitte kann in eine Profilrille, vorzugsweise in einer Umfangrille münden. Auf diese Weise kann eine Entwässerung aus der Verbreiterung in die Rille hinein erfolgen, wodurch eine gewinnbringende Einbettung der Erfindung in eine entsprechende Profilumgebung erzielt werden kann.

Es können mehrere Oberflächenelemente vorgesehen sein, die erfindungsgemäß mit einem oder mehreren erfindungsgemäßen Einschnitten verbunden sein können. Gemäß einer besonders vorteilhaften Ausführungsform weist die Längserstreckung von weiter auf einer Reifenaußenseite angeordneten Oberflächenelementen mehr Quererstreckungsanteile auf als von weiter auf einer Reifeninnenseite angeordneten Oberflächenelementen, wobei die Längserstreckung von weiter auf einer Reifeninnenseite angeordneten Oberflächenelementen mehr Umfangsstreckungsanteile aufweist als von weiter auf einer Reifenaußenseite angeordneten Oberflächenelementen. Die Reifenaußenseite ist bei asymmetrischen Reifen als jede Seite definiert, die in einem am Fahrzeug montierten Zustand von der Außenseite des Fahrzeugs sichtbar ist, wobei die Reifeninnenseite der Reifenaußenseite gegenüberliegt. Ein Maß für einen Quererstreckungsanteil kann ein Winkel zur Axialrichtung eines Oberflächenelements mit geradlinigem Längsverlauf und/oder entsprechender Teilverläufe eines gebogen oder geknickt verlaufenden Oberflächenelements sein, wobei ein kleinerer Winkel mit einem größeren Quererstreckungsanteil einhergeht. Eine analoge Wechselbeziehung gilt für den Umfangserstreckungsanteil und einen Winkel zur Umfangsrichtung. Durch eine entsprechende Ausrichtung der Oberflächenelemente kann eine Optimierung der Brems-, Beschleunigungs- und Handlingeigenschaften erzielt werden.

Die vorliegende Erfindung betrifft zudem einen Fahrzeugreifen, umfassend einen erfindungsgemäßen Laufstreifen, vorzugsweise einen erfindungsgemäßen Laufstreifen wie im vorliegenden Text als bevorzugt beschrieben. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. In an sich bekannter Weise kann ein erfindungsgemäßer Fahrzeugreifen eine Karkasse mit Festigkeitsträgern, Wulstbereiche mit Wulstkernen, einen Gürtelverband mit Festigkeitsträger, Seitenwände und/oder weitere Baugruppen umfassen.

Die Erfindung betrifft auch eine Reifenform zur Herstellung eines erfindungsgemäßen Laufstreifens und/oder Fahrzeugreifens. Hierbei kann die Verbreiterung durch hervorstehende, am Fuße eines Lamellenblechs zur Herstellung des Einschnitts angeordnete Formelemente in den Laufstreifen eingebracht werden.

Der Laufstreifen kann mit weiteren Merkmalen fortgebildet werden, die im Zusammenhang mit dem erfindungsgemäßen Fahrzeugreifen und/oder der erfindungsgemäßen Reifenform beschrieben sind. Der Fahrzeugreifen kann mit weiteren Merkmalen fortgebildet werden, die im Zusammenhang mit dem erfindungsgemäßen Laufstreifen und/oder der erfindungsgemäßen Reifenform beschrieben sind. Die Reifenform kann mit weiteren Merkmalen fortgebildet werden, die im Zusammenhang mit dem erfindungsgemäßen Laufstreifen und/oder dem erfindungsgemäßen Fahrzeugreifen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine Seitenansicht einer Ausführungsform eines erfindungsgemäßen Fahrzeugreifens,
Figur 2 schematisch und ausschnittsweise eine Draufsicht auf eine Ausführungsform eines erfindungsgemäßen Laufstreifens.
Figur 3 schematisch eine Schnittansicht entlang der in Figur 2 eingezeichneten Schnittlinie III-III.

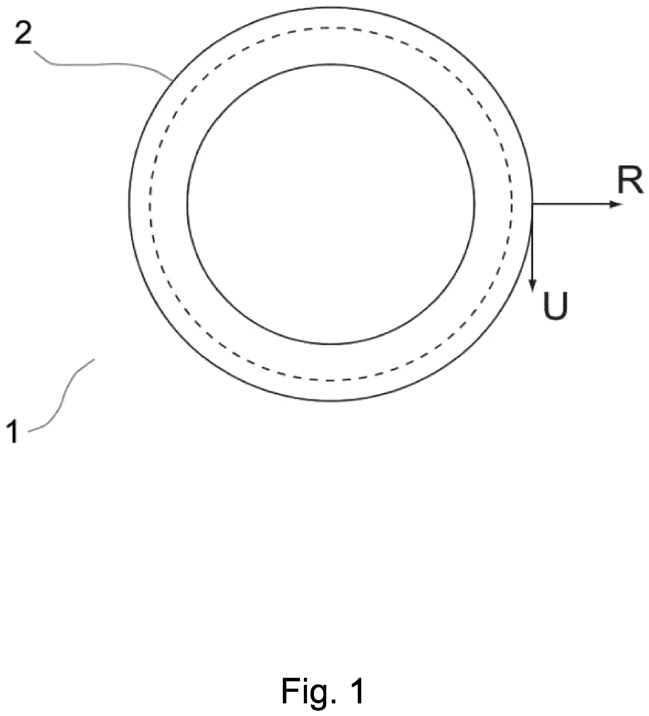

Figur 1 zeigt eine Ausführungsform eines erfindungsgemäßen Fahrzeugreifens 1 in einer stark vereinfachten Seitenansicht. In Radialrichtung R außen kann eine Ausführungsform eines erfindungsgemäßen Laufstreifens angeordnet sein. Der Reifen 1 kann in einer Umfangsrichtung abrollen.

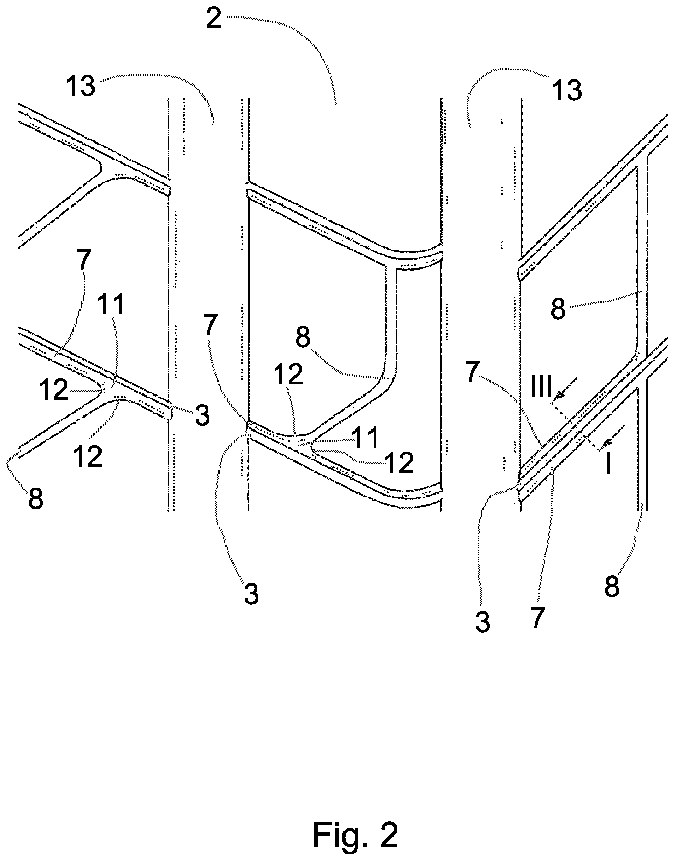

Figur 2 zeigt ausschnittsweise und schematisch eine Draufsicht auf eine Ausführungsform eines erfindungsgemäßen Laufstreifens 2. Es sind zwei Profilrillen 13, insbesondere Umfangsrillen zu erkennen, die den Laufstreifen 2 in Profilrippen unterteilen. In den Profilrippen sind Einschnitte 3 ausgebildet. Die Einschnitte 3 weisen Verbreiterungen 7 auf, die einseitig ausgebildet sein können (vgl. die in der Zeichnung linke und mittlere Profilrippe) oder zu beiden Seiten eines Einschnitts 3 vorliegen können (vgl. den in der Zeichnung unten rechts dargestellten Einschnitt 3 samt Verbreiterungen 7). Langgestreckte Oberflächenelemente 8 münden in die Verbreiterungen 7. Es sind Mündungsbereiche 11 ausgebildet, in denen sich die Oberflächenelemente 8 in Richtung der Verbreiterungen 7 aufweiten, wobei die Oberflächenelemente 8 über verrundete Wandbereiche 12 in die Verbreiterungen 7 übergehen. Die in der Zeichnung links dargestellte Seite des Laufsteifens 2 ist vorzugsweise an einer Reifenaußenseite, die rechts dargestellte Seite an einer Reifeninnenseite anzuordnen. Je weiter an der Reifenaußenseite die Oberflächenelemente 8 demgemäß angeordnet wäre, desto größer wäre deren Quererstreckungsanteil; je weiter an der Reifeninnenseite die Oberflächenelemente 8 angeordnet wären, desto größer wäre deren Umfangserstreckungsanteil.

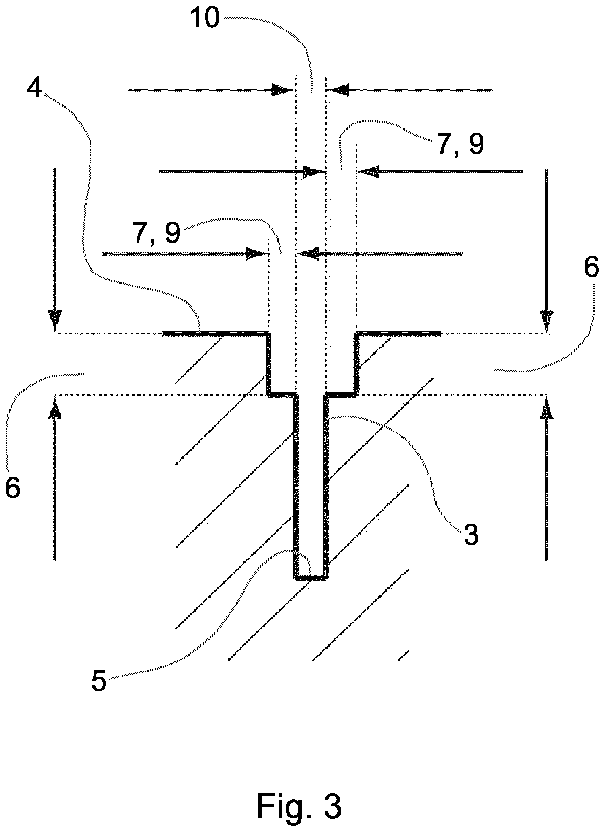

Figur 3 zeigt schematisch eine Schnittansicht entlang der in Figur 2 eingezeichneten Schnittlinie III-III, wobei die Schnittebene die Radialrichtung R einschließt. Der Einschnitt 3 erstreckt sich in der Tiefe zwischen einer Basisfläche 4 und einem Einschnittgrund 5. Zwischen der Basisfläche 4 und einer Zwischentiefe 6 ist die erfindungsgemäße Verbreiterung 7 ausgebildet. Die Verbreiterung 7 erstreckt sich von einem inneren Rand des Einschnitts 3 um eine Distanz 9 nach außen. In der gezeigten Ausführungsform ist die Distanz 9 zu beiden Seiten des Einschnitts 3 gleich groß; sie kann aber auch asymmetrisch bemessen sein. Die Einschnittbreite 10 wird zwischen den einander gegenüberliegenden inneren Rändern des Einschnitts 3 gemessen.

### Bezugszeichenliste

- 1: Fahrzeugreifen
- 2: Laufstreifen
- 3: Einschnitt
- 4: Basisfläche
- 5: Einschnittgrund
- 6: Zwischentiefe
- 7: Verbreiterung
- 8: Oberflächenelement
- 9: Distanz
- 10: Einschnittsbreite
- 11: Mündungsbereich
- 12: verrundeter Wandbereich
- 13: Profilrille
- R: Radialrichtung
- U: Umfangsrichtung

## Patentansprüche

1. Laufstreifen (2) für einen Fahrzeugreifen (1), wobei wenigstens ein Einschnitt (3) in dem Laufstreifen (2) ausgebildet ist, wobei der Einschnitt (3) zwischen einer Basisfläche (4) und einer oberhalb eines Einschnittgrundes (5) gelegenen Zwischentiefe (6) eine Verbreiterung (7) aufweist,
**dadurch gekennzeichnet,**
**dass** ein langgestrecktes Oberflächenelement (8) mit einer der Zwischentiefe (6) entsprechenden Tiefe in die Verbreiterung (7) einmündet.

2. Laufstreifen (2) gemäß Anspruch 1, **dadurch gekennzeichnet, dass** die Verbreiterung (7) nur auf einer Seite des Einschnitts (3) ausgebildet ist.

3. Laufstreifen (2) gemäß Anspruch 1, **dadurch gekennzeichnet, dass** die Verbreiterung (7) zu beiden Seiten des Einschnitts (3) ausgebildet ist.

4. Laufstreifen (2) gemäß einem der Ansprüche 1 bis 3, **dadurch gekennzeichnet, dass** die Verbreiterung (7) sich von einem inneren Rand des Einschnitts (3) um eine Distanz (9) zwischen 1 mal der Einschnittsbreite (10) und 2,5 mal der Einschnittsbreite (10) nach außen erstreckt.

5. Laufstreifen (2) gemäß einem der Ansprüche 1 bis 4, **dadurch gekennzeichnet, dass** die Zwischentiefe (6) in einem Bereich zwischen 1 mal der Einschnittsbreite (10) und 3 mal der Einschnittsbreite (10) liegt.

6. Laufstreifen (2) gemäß einem der Ansprüche 1 bis 5, **dadurch gekennzeichnet, dass** ein Verhältnis zwischen einer Breite des Oberflächenelements (8) entlang eines Großteils dessen Längserstreckung auf der einen Seite und der Zwischentiefe (6) auf der anderen Seite in einem Bereich zwischen 1 und 0,6 liegt.

7. Laufstreifen (2) gemäß einem der Ansprüche 1 bis 6, **dadurch gekennzeichnet, dass** sich das Oberflächenelement (8) mit zunehmender Nähe zu der Verbreiterung (7) des Einschnitts (3) zunehmend aufweitet, sodass sich ein auf der Zwischentiefe (6) ausgeführter flächiger Mündungsbereich (11) ausbildet.

8. Laufstreifen (2) gemäß einem der Ansprüche 1 bis 7, **dadurch gekennzeichnet, dass** das Oberflächenelement (8) über verrundete Wandbereiche (12) in die Einschnittwände im Bereich der Verbreiterung (7) übergeht.

9. Laufstreifen (2) gemäß Anspruch 8, **dadurch gekennzeichnet, dass** die verrundeten Wandbereiche (12) durch Verrundungsradii in einem Bereich zwischen 2 mm und 5 mm beschreibbar sind.

10. Fahrzeugreifen (1), umfassend einen Laufstreifen (2) gemäß einem der Ansprüche 1 bis 9.
